# EUROPEAN PATENT SPECIFICATION

(11) **EP 3 509 889 B1**
(45) Date of publication and mention of the grant of the patent: **07.07.2021**
(21) Application number: 17849197.3
(22) Date of filing: 11.08.2017
(51) Int. Cl.: B60K 15/035, B60R 16/08, B62D 33/067

(54) **AN ARRANGEMENT FOR MOUNTING A BOIL-OFF PIPE OF A LIQUEFIED GAS FUEL SYSTEM TO A VEHICLE**
ANORDNUNG ZUR MONTAGE EINES VERDAMPFUNGSROHRS EINES FLÜSSIGGASKRAFTSTOFFSYSTEMS AN EIN FAHRZEUG
AGENCEMENT POUR LE MONTAGE D'UN TUYAU D'ÉVAPORATION D'UN SYSTÈME DE COMBUSTIBLE GAZEUX LIQUÉFIÉ SUR UN VÉHICULE

(30) Priority: 09.09.2016 SE 1651210
(43) Date of publication of application: 17.07.2019
(73) Proprietor: Scania CV AB, 151 87 Södertälje (SE)
(72) Inventor: LINDEBERG, Jonas, SE-852 39 Sundsvall (SE)
(74) Representative: Scania CV AB
(86) International application number: PCT/SE2017/050812
(87) International publication number: WO 2018/048337

(56) References cited:
- WO-A1-2007/060496
- WO-A1-2007/060496
- WO-A1-2009/041862
- DE-A1- 4 243 184
- DE-A1- 4 243 184
- DE-A1- 10 118 205
- GB-A- 2 037 239

## Description

### TECHNICAL FIELD

The invention relates to an arrangement for mounting a boil-off pipe of a liquefied gas fuel system to a vehicle according to the preamble of claim 1. The invention also relates to a vehicle.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degree Celsius at 10 bar for LNG, requiring certain conduits for transporting the liquefied natural gas and a certain tank for housing the fuel. When the vehicle is standing still and the engine is not operating the pressure in the tank will increase due to temperature increase in the tank. Therefore the system for liquefied gas is provided with a relief valve which according to an embodiment is set to open at 16 bar for evacuating evaporated gas.

The fuel tank/tanks for liquefied gas systems are usually arranged along and in connection to the vehicle frame. The evaporated gas is configured to be evacuated via a so called boil-off pipe connected to the fuel tank. The gas needs to be evacuated at a certain height. The boil-off pipe is further not allowed to project laterally or upwardly from the vehicle. For trucks the boil-off pipe is therefore usually arranged behind the cab of the truck. For trucks having a tiltable cabs, i.e. cabs arranged to be tilted forwardly, the boil-off pipe is according to a variant arranged to be connected to a vertical member arranged in connection to and at a distance from the rear side of the cab to avoid influence from the tilting.

Such a solution, however, takes up space behind the cab which otherwise could be used for overhang or semi-trailer in order to optimize the length of the load carrying part of the vehicle. An arrangement for mounting a boil-off pipe is known from DE 4243184.

### OBJECTS OF THE INVENTION

An object of the present invention is to provide an arrangement for mounting a boil-off pipe of a liquefied gas fuel system to a vehicle which facilitates optimizing the length of a load carrying part of the vehicle and a safe and efficient tilting of the cab.

### SUMMARY OF THE INVENTION

These and other objects, apparent from the following description, are achieved by an arrangement and a vehicle as set out in the appended independent claims. Preferred embodiments of the arrangement are defined in appended dependent claims.

Specifically an object of the invention is achieved by an arrangement for mounting a boil-off pipe of a liquefied gas fuel system to a vehicle, said vehicle having a tiltable cab. Said fuel system has a chassis-mounted liquefied gas fuel tank for providing fuel to the engine of the vehicle, wherein evaporated gas is arranged to be evacuated from said tank via said boil-off pipe at a certain tank pressure. Said boil-off pipe is arranged in connection to the rear side of the cab via a connection arrangement of said arrangement. According to the arrangement said boil-off pipe is attached to the rear side of the cab, wherein said connection arrangement comprises a flexible tube arranged to be connected at one end to the tank and at the other end to the boil-off pipe. Said connection arrangement comprises a link arm configuration comprising at least one link arm arranged to be pivotably connected at one end to the rear side of the cab, wherein said link arm configuration is arranged to support said flexible tube so as to accommodate a tilting movement of said cab.

By thus attaching the boil-off pipe to the rear side of the vehicle cab the length of a load carrying part of the vehicle arranged behind the cab may be optimized. By thus providing link arm configuration comprising at least one link arm pivotably connected at one end to the rear side of the cab, wherein said link arm configuration is arranged to support said flexible tube so as to accommodate a tilting movement of said cab no disconnection of the connection arrangement is required in order to tilt the cab to the tilted position. Thus, hereby a safe and efficient tilting of the cab is facilitated.

According to an embodiment of the arrangement said at least one link arm is arranged to be pivoted from a position against said rear side of the cab in a non-tilted position of the cab and to a position pivoted away from said rear side of the cab in a tilted position of the cab. Hereby efficient tilting of the cab is facilitated.

According to an embodiment of the arrangement said link arm configuration comprises means for automatically returning said at least one link arm to a position against the rear side of the cab in a non-tilted position of the cab. Hereby efficient returning of said at least one link arm when the cab is moved back to the non-tilted position is facilitated.

According to an embodiment of the arrangement said link arm configuration has one link arm. Hereby simple design may be obtained.

According to an embodiment of the arrangement said link arm configuration has at least two link arms, said at least two link arms being mutually pivotably connected. Hereby a link arm configuration which provides efficient and controlled mutual pivoting for efficient tilting of the cab is facilitated.

Specifically an object of the invention is achieved by a connection arrangement assembly comprising a chassis-mounted liquefied gas fuel tank, a cab-mounted boil-off pipe and a connection arrangement as set out herein, wherein said connection arrangement is arranged to operatively connect the gas fuel tank with the cab-mounted boil-off pipe in both a tilted cab position and non-tilted cab position.

Specifically an object of the invention is achieved by a vehicle comprising an arrangement as set out herein.

Specifically an object of the invention is achieved by a vehicle comprising a connection arrangement assembly as set out herein.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1 a schematically illustrates a side view of a vehicle with a tiltable cab in a non-tilted position, the vehicle having an arrangement for mounting a boil-off pipe to the cab of the vehicle according to an embodiment of the present invention;
Fig. 1b schematically illustrates a side view of the vehicle in fig. 1a with the cab in a tilted position;
Fig. 2a schematically illustrates a side view of an arrangement for mounting a boil-off pipe to a vehicle via a connection arrangement comprising a link arm configuration having one link arm according to an embodiment of the present invention;
Fig. 2b schematically illustrates a perspective view of the arrangement in fig. 2a;
Fig. 3a schematically illustrates a side view of a connection arrangement comprising a link arm configuration having three link arms in a non-tilted cab position according to an embodiment of the present invention;
Fig. 3b schematically illustrates the connection arrangement in fig. 3a in a tilted cab position;
Fig. 3c schematically illustrates a side view of a link arm in fig. 3a; and
Fig. 3d schematically illustrates a front view of the link arm in fig. 3c.

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

Hereinafter the term "flexible tube" refers to any flexible tube such as a hose configured to transport fluid for a liquefied gas fuel system, said flexible tube being bendable to a certain degree and having a certain flexibility so as to facilitate taking up relative movements of a vehicle cab relative to a liquefied gas fuel tank.

Hereinafter the term "boil-off pipe" refers to a pipe, preferably a rigid pipe, configured to evacuate evaporated gas from a liquefied gas fuel tank of a liquefied gas fuel system. The pipe is according to an embodiment made of stainless steel. The boil-off pipe could alternatively be flexible such as a flexible hose.

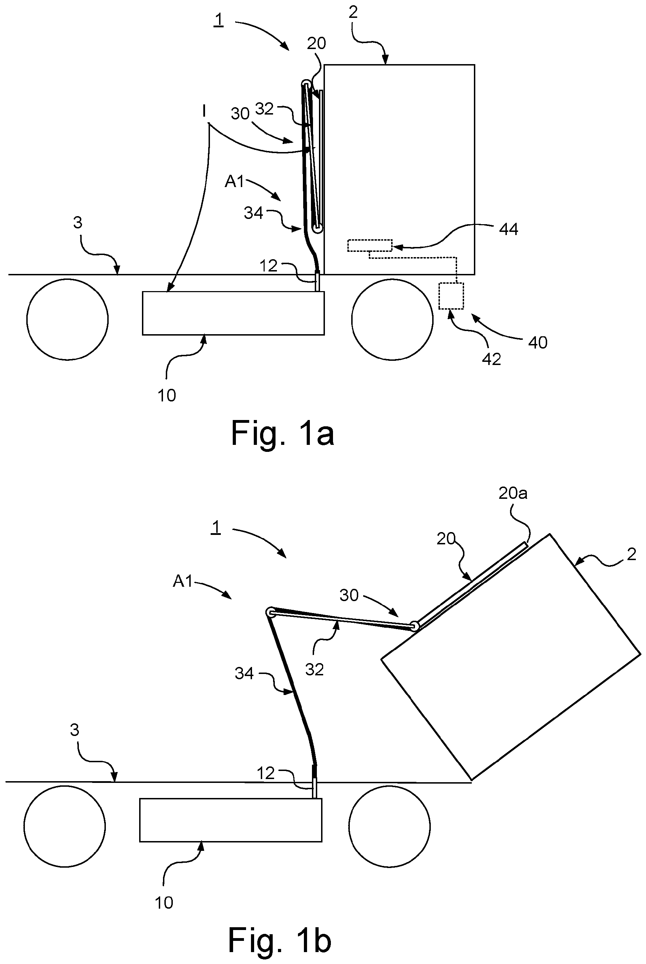

Fig. 1a schematically illustrates a side view of a vehicle 1 with a tiltable cab 2 in a non-tilted position, the vehicle 1 having an arrangement A for mounting a boil-off pipe 20 of a liquefied gas fuel system I according to an embodiment of the present invention and fig. 1b a side view of the vehicle 1 in fig. 1a with the cab 2 in a tilted position.

The vehicle 1 has a vehicle chassis 3. The cab 2 is tiltable relative to the vehicle chassis 3. The exemplified vehicle 1 is a heavy vehicle in the shape of a truck. The vehicle 1 is fuelled by means of a liquefied gas fuel system I for operating the engine of the vehicle 1. The vehicle 1 may be any suitable truck configured to be arranged with a load carrying part behind the cab 2. Such a vehicle may be a truck arranged to carry an overhang behind the cab 2 or a semi-trailer truck comprising a towing truck and a semi-trailer coupled to the towing truck behind the cab 2 via a fifth wheel.

The cab 2 is tiltable between a non-tilted position, illustrated in fig. 1a, in which the cab is upright and the vehicle may be driven and a tilted position, illustrated in fig. 1b. In the non-tilted position, the cab 2 is locked by means of cab locking members, not shown. The cab 2 may be tilted in any suitable way by any tiltable means. The cab 2 is according to an embodiment tiltable by means of a cab tilting operation arrangement 40 shown in fig. 1a. The cab tilting operation arrangement 40 comprises a pump unit 42 and at least one hydraulic piston unit 44 for tilting the cab 2, hydraulically connected to the pump unit 42 via a hydraulic line.

The vehicle 1 thus comprises a liquefied gas fuel system I. Said liquefied gas fuel system I comprises a chassis-mounted liquefied gas fuel tank 10 for providing fuel to the engine of the vehicle 1. Said liquefied gas fuel system I comprises a boil-off pipe 20 through which evaporated gas from the tank 10 is configured to be evacuated at a certain tank pressure. The boil-off pipe 20 is configured to be connected to the fuel tank 10. The system for liquefied gas is provided with a relief valve, not shown, which is set to open at said certain pressure, said pressure according to an embodiment being 16 bar, for evacuating evaporated gas from the tank 10 via the boil-off pipe 20. Said pressure may depend on the size of the tank.

The vehicle 1 illustrated in fig. 1a and 1b is a simplified illustration. The vehicle chassis 3 of the vehicle 1 normally comprises a vehicle frame comprising a left longitudinal vehicle beam and a right longitudinal vehicle beam, not shown. The liquefied gas fuel tank 10 is arranged in connection to the vehicle frame. The liquefied gas fuel tank 10 may according to an embodiment comprise a left liquefied gas fuel tank part arranged in connection to a left longitudinal vehicle beam and a right liquefied gas fuel tank part arranged in connection to the right longitudinal beam of the chassis of the vehicle 1.

The vehicle comprises an arrangement A1 for mounting the boil-off pipe 20 of said liquefied gas fuel system I to the vehicle. The arrangement A1 for mounting the boil-off pipe 20 to the vehicle 1 comprises a connection arrangement 30. The boil-off pipe 20 is configured to be connected to the fuel tank 10 via said connection arrangement 30. The connection arrangement 30 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said connection arrangement 30.

The connection arrangement 30 comprises a link arm configuration 32 arranged between said tank 10 and said boil-off pipe 20. The connection arrangement 30 comprises a flexible tube 34 connected at one end to the tank 10 via said pipe 12 and at the other end to the boil-off pipe 20 via said link arm configuration 32.

The link arm configuration 32 is arranged to support said flexible tube so as to accommodate a tilting movement of said cab. The link arm configuration 32 comprises an arm 32a arranged to be pivotably connected at one end to the rear side of the cab 2.

The link arm 32a is arranged to be pivoted from a position against said rear side of the cab 2 in a non-tilted position of the cab 2, illustrated in fig. 1a, and to a position pivoted away from said rear side of the cab 2 in a tilted position of the cab 2, illustrated in fig. 1b.

Thus, the flexible tube is arranged to be folded on the link arm 32a in the non-tilted position of the cab 2 and unfolded by means of the link arm 32a in the tilted position of the cab 2.

The vehicle in fig. 1a-b comprises a connection arrangement assembly 10, 20, 30 comprising said chassis-mounted liquefied gas fuel tank 10, said cab-mounted boil-off pipe 20 and said connection arrangement 30, wherein said connection arrangement 30 is arranged to operatively connect the gas fuel tank 10 with the cab-mounted boil-off pipe 20 in both the tilted cab position and non-tilted cab position. Thus, said chassis-mounted liquefied gas fuel tank 10, said cab-mounted boil-off pipe 20 and said connection arrangement 30 provides a connection arrangement assembly 10, 20, 30, wherein said connection arrangement 30 is arranged to operatively connect the gas fuel tank 10 with the cab-mounted boil-off pipe 20 in both the tilted cab position and non-tilted cab position.

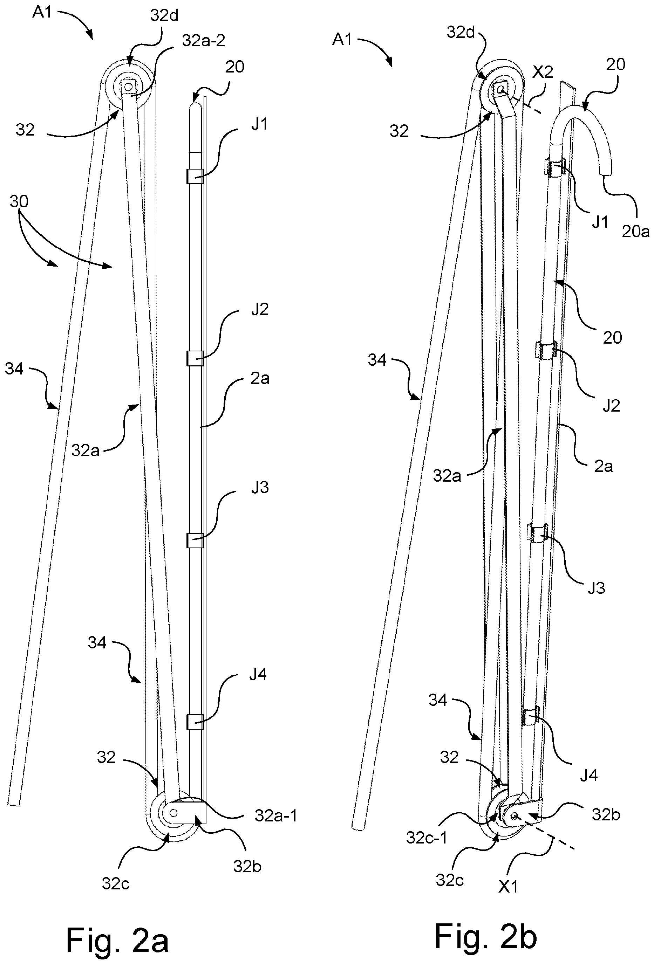

Fig. 2a-b described below illustrate a specific embodiment of the link arm configuration 32 of the connection arrangement 30 of the arrangement A1.

Fig. 2a schematically illustrates a side view of an embodiment of an arrangement A1 for mounting a boil-off pipe 20 of a liquefied gas fuel system to a vehicle, and fig. 2b schematically illustrates a perspective view of the arrangement A1 in fig. 2a.

The arrangement A1 for mounting a boil-off pipe 20 to a tiltable cab of a vehicle comprises a connection arrangement 30. The connection arrangement 30 comprises a link arm configuration 32. The connection arrangement 30 comprises a flexible tube 34 connected at one end to the tank and at the other end to the boil-off pipe.

The link arm configuration 32 is arranged to support said flexible tube so as to accommodate a tilting movement of said cab 2. The link arm configuration 32 comprises a link arm 32a arranged to be pivotably connected at one end to the rear side of the cab 2. The link arm 32a has a first end 32a-1 and an opposite second end 32a-2.

The link arm configuration 32 comprises an attachment member 32b configured to be attached to the rear side of the cab. A first end of the arm 32a is arranged to be connected to the attachment member 32b. The arm 32a is pivotably arranged about an axis X1 to the attachment member 32b.

The link arm configuration 32 comprises a first link member 32c arranged in connection to said first end 32a-1 of the link arm 32a. The first link member 32c is connected to the attachment member 32b via said axis X1. The first link member 32c has a wheel shape with said axis X1 about which said link arm 32a is pivotable. The first link member 32c is thus shaped as a wheel, e.g. a trundle, role or the like. The wheel-shaped first link member 32c is according to an embodiment rotatable about said axis X1.

According to an embodiment said link arm configuration 32 comprises means 32c-1 for automatically returning said link arm 32a to a position against the rear side of the cab in a non-tilted position of the cab. The means 32c-1 for automatically returning said link arm 32a to a position against the rear side of the cab in a non-tilted position of the cab is arranged in connection to the hub of the wheel-shaped first link member 32c. The means 32c-1 may not be visible in fig. 2b, the reference sign 32c-1 however indicating that the means 32c-1 for automatically returning said link arm 32a may be arranged within the hub of the wheel-shaped first link member 32c and/or externally in connection to the hub.

The means 32c-1 for automatically returning said link arm 32a to a position against the rear side of the cab in a non-tilted position of the cab comprises according to an embodiment a spring member arranged to provide a spring action such that a spring resistance for pivoting the link arm 32a is provided. The spring member of the means 32c-1 is thus arranged to provide a spring resistance allowing pivoting the link arm 32a during tilting of the cab and a spring action when the cab is returned from a tilted position to a non-tilted position, wherein returning of said link arm 32a to a position against the rear side of the cab is effected by means of said spring action such that the link arm 32a is automatically returned.

The means 32c-1 for automatically returning said link arm 32a to a position against the rear side of the cab in a non-tilted position of the cab may alternatively comprises a motor for providing said automatic retraction.

The link arm configuration 32 comprises a second link member 32d arranged in connection to said second end 32a-2 of the link arm 32a. The second link member 32d has a wheel shape with said axis X2 about which said link arm 32a is pivotable. The second link member 32d is thus shaped as a wheel, e.g. a trundle, role or the like. The wheel-shaped second link member 32d is according to an embodiment rotatable about said axis X2.

The link arm configuration 32 is configured to be arranged between the not shown tank and said boil-off pipe 20. The link arm configuration 32 is arranged to be attached to the rear side of the cab, not shown.

The arrangement A1 for mounting a boil-off pipe 20 comprises an elongated fastening element 2a along which the boil-off pipe 20 is attached. The elongated fastening element 2a is intended to be attached to the rear side of the cab. The link arm configuration 32 is configured to be attached to the rear side of the cab via said elongated fastening element 2a.

The boil-off pipe 20 may, according to an embodiment, connected to the attachment member 32b.

The flexible tube 34 is connected to the tank via said first link member 32c and second link member 32d. The flexible tube 34 is arranged to run a circumferential portion of the first link member 32c, along the link arm 32a and the second link member 32d to the not shown tank.

The arrangement A1 comprises fastening members J1, J2, J3, J4 for attaching the boil-off pipe 20 to the back of the cab 2. The fastening members J1, J2, J3, J4 for attaching the boil-off pipe 20 to the back of the cab 2 via said elongated fastening element 2a. The fastening members J1, J2, J3, J4 may be any suitable fastening members for attaching said boil-off pipe 20 to the back of the cab providing any suitable joint, e.g. a snap joint or a screw joint.

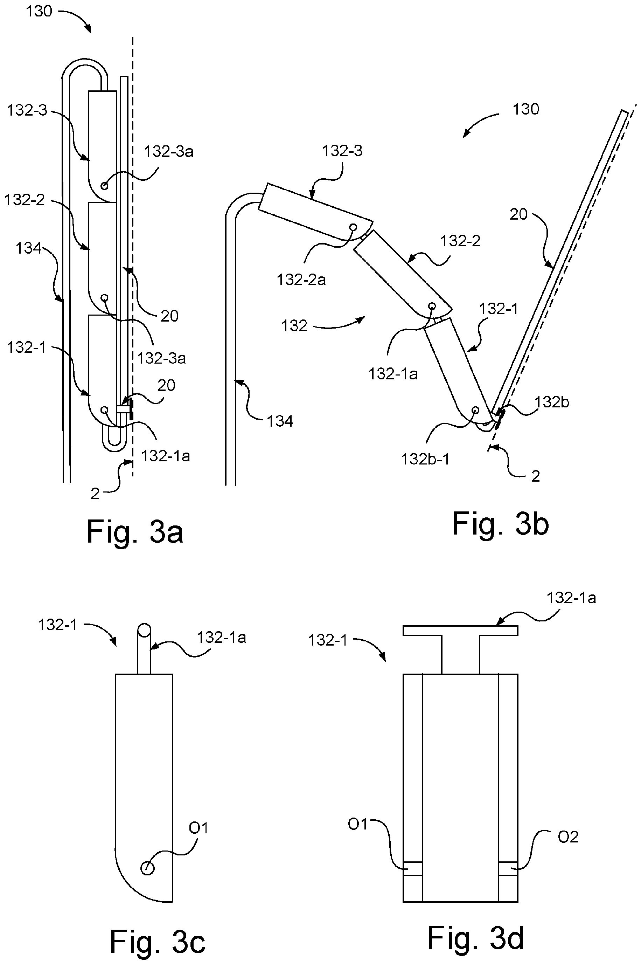

Fig. 3a schematically illustrates a side view of a connection arrangement 130 comprising a link arm configuration 132 having three link arms 132-1, 132-2, 132-3 in a non-tilted cab position according to an embodiment of the present invention, and fig. 3b schematically illustrates the connection arrangement 130 in fig. 3a in a tilted cab position.

The connection arrangement 130 comprises a link arm configuration 132. The connection arrangement 130 comprises a flexible tube 134 connected at one end to the tank and at the other end to the boil-off pipe.

The link arm configuration 132 is arranged to support said flexible tube 134 so as to accommodate a tilting movement of said cab. The link arm configuration 132 comprises three link arms 132-1, 132-2, 132-3 arranged to be pivotably connected at one end to the rear side of the cab 2. The link arm configuration 132 comprises three link arms 132-1, 132-2, 132-3, a first link arm 132-1, a second link arm 132-2 and a third link arm 132-3. The respective link arm 132-1, 132-2, 132-3 has a first end and an opposite second end.

Said link arms 132-1, 132-2, 132-3 are mutually pivotably connected to each other.

The link arm configuration 132 comprises an attachment member 132b configured to be attached to the rear side of the cab 2. A first end of the first link arm 132-1 is arranged to be connected to the attachment member 132b. The first link arm 132-1 is pivotably arranged to an axle member 132b-1 of the attachment member 132b.

The first link arm 132-1 comprises an axle member 132-1a. The second link arm 132-2 comprises an axle member 132-2a. The second link arm 132-2 is pivotably connected to the first link arm 132-2 via the axle member 132-1a of the first link arm 132-1. The third link arm 132-3 is pivotably connected to the second link arm 132-2 via the axle member 132-2a of the second link arm 132-1.

According to an embodiment said link arm configuration 32 comprises means, not shown, for automatically returning said link arms 132-1, 132-2, 132-3 to a position against the rear side of the cab in a non-tilted position of the cab 2. The means for automatically returning said link arms 132-1, 132-2, 132-3 to a position against the rear side of the cab 2 in a non-tilted position of the cab 2 is arranged to provide a returning connection between the respective link arm 132-1, 132-2, 132-3 and in connection to the attachment member 132b.

The means for automatically returning said link arms 132-1, 132-2, 132-3 to a position against the rear side of the cab in a non-tilted position of the cab comprises according to an embodiment a spring member, elastic member or the like, arranged to provide a returning action such that a resistance for pivoting the link arms 132-1, 132-2, 132-3 is provided.

The link arm configuration 132 is configured to be arranged between the not shown tank and said boil-off pipe 20. The link arm configuration 132 is arranged to be attached to the rear side of the cab 2 via said attachment member 132b.

The flexible tube 134 is connected to the tank via said link configuration 132. The flexible tube 134 is arranged to run along the respective link arm 132-1, 132-2, 132-3 of the link arm configuration 132 to the not shown tank.

Fig. 3c schematically illustrates a side view of the first link arm 132-1 in fig. 3a, and fig. 3d schematically illustrates a front view of the first link arm 132-1 in fig. 3c.

The first link arm 132-1 comprises said axle member 132-1a. The first link arm 132-1 comprises openings 01, O2 for receiving the axle member 132b-1 of the attachment member 132b illustrated in fig. 3a-b so that a pivotal connection between the attachment member and the first link arm 132-1 is obtained.

The vehicle 1 in fig. 3a-b comprises a connection arrangement assembly 10, 20, 130 comprising said chassis-mounted liquefied gas fuel tank 10, said cab-mounted boil-off pipe 20 and said connection arrangement 130, wherein said connection arrangement 130 is arranged to operatively connect the gas fuel tank 10 with the cab-mounted boil-off pipe 20 in both the tilted cab position and non-tilted cab position. Thus, said chassis-mounted liquefied gas fuel tank 10, said cab-mounted boil-off pipe 20 and said connection arrangement 130 provides a connection arrangement assembly 10, 20, 130, wherein said connection arrangement 130 is arranged to operatively connect the gas fuel tank 10 with the cab-mounted boil-off pipe 20 in both the tilted cab position and non-tilted cab position.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art in accordance with the scope of the invention as defined by the appended claims. The embodiments were chosen and described

in order to best explain the principles of the invention and its practical applications, thereby enabling others skilled in the art to understand the invention for various embodiments and with the various modifications as are suited to the particular use contemplated.

## Claims

1. An arrangement (A1) for mounting a boil-off pipe (20) of a liquefied gas fuel system (I) to a vehicle (1), said vehicle having a tiltable cab (2), said fuel system having a chassis-mounted liquefied gas fuel tank (10) for providing fuel to the engine of the vehicle (1), wherein evaporated gas is arranged to be evacuated from said tank (10) via said boil-off pipe (20) at a certain tank pressure, said boil-off pipe being arranged in connection to a rear side of the cab (2) via a connection arrangement (30; 130) of said arrangement (A1), **characterized in that** said boil-off pipe (20) is attached to the rear side of the cab (2), wherein said connection arrangement (30; 130) comprises a flexible tube (34; 134) arranged to be connected at one end to the tank (10) and at the other end to the boil-off pipe (20), wherein said connection arrangement (30; 130) comprises a link arm configuration (32; 132) comprising at least one link arm (32a; 132-1, 132-2, 132-3) arranged to be pivotably connected at one end (32a-1; 132-1a) to the rear side of the cab (2), wherein said link arm configuration (32; 132) is arranged to support said flexible tube (34; 134) so as to accommodate a tilting movement of said cab (2).

2. An arrangement according to claim 1, wherein said at least one link arm (32a; 132-1, 132-2, 132-3) is arranged to be pivoted from a position against said rear side of the cab (2) in a non-tilted position of the cab (2) and to a position pivoted away from said rear side of the cab (2) in a tilted position of the cab (2).

3. An arrangement according to claim 1 or 2, wherein said link arm configuration (32; 132) comprises means for automatically returning said at least one link arm to a position against the rear side of the cab (2) in a non-tilted position of the cab (2).

4. An arrangement according to any of claims 1-3, wherein said link arm configuration (32) has one link arm (32a).

5. An arrangement according to any of claims 1-3, wherein said link arm configuration (132) has at least two link arms (132-1, 132-2, 132-3), said at least two link arms being mutually pivotably connected.

6. A connection arrangement assembly (10, 20, 30; 130) comprising a chassis-mounted liquefied gas fuel tank (10), a cab-mounted boil-off pipe (20) and a connection arrangement (30; 130) according to any of claims 1-5, wherein said connection arrangement (30; 130) is arranged to operatively connect the gas fuel tank (10) with the cab-mounted boil-off pipe (20) in both a tilted cab position and non-tilted cab position.

7. A vehicle (1) comprising an arrangement (A1) according to any of claims 1-5.

8. A vehicle (1) comprising a connection arrangement assembly (10, 20, 30; 130) according to claim 6.

## Patentansprüche

1. Anordnung (A1) zur Montage eines Abdampfrohrs (20) eines Flüssiggaskraftstoffsystems (I) an ein Fahrzeug (1), wobei das Fahrzeug ein kippbares Führerhaus (2) hat, wobei das Kraftstoffsystem einen am Fahrgestell befestigten Flüssiggaskraftstofftank (10) zum Liefern von Kraftstoff an den Motor des Fahrzeugs (1) aufweist, wobei verdampftes Gas dazu vorgesehen ist, bei einem bestimmten Tankdruck aus dem Tank (10) über das Abdampfrohr (20) evakuiert zu werden, wobei das Abdampfrohr mittels einer Verbindungsanordnung (30; 130) der Anordnung (A1) in Verbindung mit einer Rückseite des Führerhauses (2) angeordnet ist, **dadurch gekennzeichnet, dass** das Abdampfrohr (20) an der Rückseite des Führerhauses (2) befestigt ist, wobei die Verbindungsanordnung (30; 130) ein flexibles Rohr (34; 134) umfasst, das dazu angeordnet ist, an einem Ende mit dem Tank (10) und an dem anderen Ende mit dem Abdampfrohr (20) verbunden zu werden, wobei die Verbindungsanordnung (30; 130) eine Verbindungsarmanordnung (32; 132) umfasst, die zumindest einen Verbindungsarm (32a; 132-1, 132-2, 132-3) aufweist, der dazu angeordnet ist, an einem Ende (32a-1; 132-1a) schwenkbar mit der Rückseite des Führerhauses (2) verbunden zu werden, wobei die Verbindungsarmanordnung (32; 132) dazu angeordnet ist, das flexible Rohr (34; 134) derart abzustützen, dass einer Kippbewegung des Führerhauses (2) Rechnung getragen wird.

2. Anordnung nach Anspruch 1, bei der der zumindest eine Verbindungsarm (32a; 132-1, 132-2, 132-3) dazu angeordnet ist, aus einer Stellung an der Rückseite des Führerhauses (2) in einer nicht gekippten Position des Führerhauses (2) verschwenkt und in einer gekippten Position des Führerhauses (2) in eine von der Rückseite des Führerhauses (2) weggeschwenkte Stellung geschwenkt zu werden.

3. Anordnung nach Anspruch 1 oder 2, bei der die Verbindungsarmanordnung (32; 132) Mittel zum automatischen Rückstellen des zumindest einen Verbindungsarms in eine Stellung an der Rückseite des Führerhauses (2) in einer nicht gekippten Position des Führerhauses (2) umfasst.

4. Anordnung nach einem der Ansprüche 1 bis 3, bei der die Verbindungsarmanordnung (32) einen Verbindungsarm (32a) aufweist.

5. Anordnung nach einem der Ansprüche 1 bis 3, bei der die Verbindungsarmanordnung (132) wenigstens zwei Verbindungsarme (132-1, 132-2, 132-3) aufweist, wobei die wenigstens zwei Verbindungsarme miteinander schwenkbar verbunden sind.

6. Verbindungsanordnungsbaugruppe (10, 20, 30; 130), die einen am Fahrgestell befestigten Flüssiggaskraftstofftank (10), ein am Führerhaus montiertes Abdampfrohr (20) und eine Verbindungsanordnung (30; 130) nach einem der Ansprüche 1 bis 5 umfasst, wobei die Verbindungsanordnung (30; 130) dazu angeordnet ist, den Gaskraftstofftank (10) in sowohl einer gekippten Führerhausposition als auch einer nicht gekippten Führerhausposition betriebsfähig mit dem am Führerhaus montierten Abdampfrohr (20) zu verbinden.

7. Fahrzeug (1) mit einer Anordnung (A1) nach einem der Ansprüche 1 bis 5.

8. Fahrzeug (1) mit einer Verbindungsanordnungsbaugruppe (10, 20, 30; 130) nach Anspruch 6.

## Revendications

1. Agencement (A1) destiné à monter une conduite d'évaporation (20) d'un système de carburant gazeux liquéfié (I) sur un véhicule (1), ledit véhicule ayant une cabine inclinable (2), ledit système de carburant ayant un réservoir de carburant gazeux liquéfié monté sur châssis (10) destiné à fournir du carburant au moteur du véhicule (1), dans lequel le gaz évaporé est agencé pour être évacué dudit réservoir (10) via ladite conduite d'évaporation (20) à une certaine pression de réservoir, ladite conduite d'évaporation étant agencée en connexion à un côté arrière de la cabine (2) via un agencement de connexion (30 ; 130) dudit agencement (A1), **caractérisé en ce que** ladite conduite d'évaporation (20) est fixée au côté arrière de la cabine (2), dans lequel ledit agencement de connexion (30 ; 130) comprend un tube flexible (34 ; 134) agencé pour être connecté au niveau d'une extrémité au réservoir (10) et au niveau de l'autre extrémité à la conduite d'évaporation (20), dans lequel ledit agencement de connexion (30 ; 130) comprend une configuration de bras de liaison (32 ; 132) comprenant au moins un bras de liaison (32a ; 132-1, 132-2, 132-3) agencé pour être connecté de manière pivotante au niveau d'une extrémité (32a-1 ; 132-1 a) au côté arrière de la cabine (2), dans lequel ladite configuration de bras de liaison (32 ; 132) est agencée pour supporter ledit tube flexible (34 ; 134) de manière à s'adapter à un mouvement d'inclinaison de ladite cabine (2).

2. Agencement selon la revendication 1, dans lequel ledit au moins un bras de liaison (32a ; 132-1, 132-2, 132-3) est agencé pour être pivoté d'une position contre ledit côté arrière de la cabine (2) dans une position non inclinée de la cabine (2) et à une position pivotée à l'écart dudit côté arrière de la cabine (2) dans une position inclinée de la cabine (2).

3. Agencement selon la revendication 1 ou 2, dans lequel ladite configuration de bras de liaison (32 ; 132) comprend un moyen pour ramener automatiquement ledit au moins un bras de liaison dans une position contre le côté arrière de la cabine (2) dans une position non inclinée de la cabine (2).

4. Agencement selon l'une quelconque des revendications 1 à 3, dans lequel ladite configuration de bras de liaison (32) a un bras de liaison (32a).

5. Agencement selon l'une quelconque des revendications 1 à 3, dans lequel ladite configuration de bras de liaison (132) a au moins deux bras de liaison (132-1, 132-2, 132-3) lesdits au moins deux bras de liaison étant connectés de manière pivotante mutuelle.

6. Ensemble d'agencement de connexion (10, 20, 30 ; 130) comprenant un réservoir de carburant gazeux liquéfié monté sur châssis (10), une conduite d'évaporation montée sur cabine (20) et un agencement de connexion (30 ; 130) selon l'une quelconque des revendications 1 à 5, dans lequel ledit agencement de connexion (30 ; 130) est agencé pour connecter de manière fonctionnelle le réservoir de carburant gazeux (10) avec la conduite d'évaporation montée sur cabine (20) à la fois dans une position de cabine inclinée et dans une position de cabine non inclinée.

7. Véhicule (1) comprenant un agencement (A1) selon l'une quelconque des revendications 1 à 5.

8. Véhicule (1) comprenant un ensemble d'agencement de connexion (10, 20, 30 ; 130) selon la revendication 6.
